# EUROPEAN PATENT SPECIFICATION

(11) **EP 0 686 100 B1**
(45) Date of publication and mention of the grant of the patent: **21.05.1997**
(21) Application number: 94909349.6
(22) Date of filing: 04.03.1994
(51) Int. Cl.: B60J 5/04, B60R 19/42, B62D 25/02

(54) **REINFORCING IMPACT BEAM AND A WALL PORTION OF A VEHICLE HAVING AT LEAST ONE IMPACT BEAM**
VERSTÄRKENDE STOSSSTANGE UND FAHRZEUGSEITENWAND MIT MINDESTENS EINER STOSSSTANGE
BARRE PARE-CHOCS DE RENFORCEMENT LATERAL ET PIECE DE PAROI POUR VEHICULE POSSEDANT AU MOINS UNE BARRE PARE-CHOCS

(30) Priority: 04.03.1993 DE 4306824
(43) Date of publication of application: 13.12.1995
(73) Proprietor: NORSK HYDRO A/S, 0240 Oslo 2 (NO)
(72) Inventor: CLAUSEN, Edvin, List, DK-6270 Tonder (DK); GÄRTNER, Jost, D-4708 Bönen/bei Unna (DE)
(74) Representative: Weickmann, Heinrich, Dipl.-Ing.
(86) International application number: NO9400054
(87) International publication number: WO9420322

(56) References cited:
- EP-A- 0 284 566
- EP-A- 0 330 759
- EP-A- 0 498 008
- WO-A-91/10582
- WO-A-93/04886

## Description

The present invention relates to an impact beam for reinforcing a wall portion of a motor vehicle, in particular a side wall portion or a door of a passenger car, this impact beam being a profile made of light metal or light metal alloy applied as a component of the wall portion having two wall elements substantially parallel to a principal plane of the wall portion and spaced from each other orthogonally to the principal plane, as well as at least two connecting webs linking these wall elements, spaced from each other in a direction parallel to the principal plane.

Such an impact beam is known, for instance, from European Patent No. 0 235 091 B1.

The impact beams concerned are incorporated in the respective wall element in such a way that they restrict deformation of this wall element in case of an impact against the respective wall element, in particular by another vehicle driving towards the respective wall element in the orthogonal direction, so as to protect persons and/or objects positioned behind this wall element. Here, these wall elements are to behave in such a way that they absorb as much of the impact energy as possible on a deformation path perpendicular to the principal plane of the wall element. The decisive factor thus is that the wall element and in particular the impact beam used for reinforcing offers a relatively great impact resistance, not only when the impact action begins, but also during the subsequent deformation, in spite of the respective deformation that has already taken place.

It is an object of the present invention to provide an impact beam of the above type having minimum weight and offering an even more favourable deformation behaviour with as high deformation strength as possible complying with the requirements indicated above.

In order to solve this problem an impact beam according to the present invention is provided with connecting webs interconnected in a central region between the two wall elements by at least, and preferably one, intermediate wall substantially parallel to the wall elements.

It was proved that, with the beam design according to the invention, the impact behaviour of the impact beam, and a wall portion provided therewith can be further improved at constant weight per unit length or, in other words, that for a certain impact behaviour required by car manufacturers and safety regulations, the weight per unit length of the impact beam may be reduced.

In particular, it has turned out that the energy absorption properties of the wall portion and the impact beam, respectively, are improved by maintaining the cross-section of the beam even at severe deformation.

The deformation strength of the impact beam substantially depends on dimensions of the wall elements connected to each other and supported against each other by connecting webs, and furthermore on the distance therebetween. Here, the wall thickness and the length of the connecting webs also influence the stability of the impact beam and thus the deformation behaviour. The distance between the wall elements cannot be reduced, as reducing this distance would inevitably lead to a decrease in the deformation strength of the impact beam as a whole. It is, however, possible to reduce the wall thickness of the connecting webs by integrating the intermediate wall.

Further improvement of the deformation strength of the impact beam may be achieved by forming the connecting webs curved or inclinating towards the intermediate wall. The degree of inclination is critical here. Decrease in the proximity of the connecting webs resulting from the curving or inclination should be within a range corresponding to from approximately 1.0 times to approximately 6.0 times the wall thickness of the connecting webs. Preferably the proximity decrease corresponds to at least 2.0 times and most preferred to at least 3.0 times the wall thickness of the connecting webs. The resulting divergence of the connecting web portions from the intermediate wall is to be relatively small, so that controlled deformation behaviour of the impact beam is achieved. Too great a divergence of connecting web portions opposing each other would have adverse effects on the stability of the impact beam.

A further advantage may be achieved by linking the connecting webs to the intermediate wall in the impact beam, where the full height of the impact beam throughout the whole length may not be employed for reasons of space. In such cases, one of the chambers of the impact beam may be prefolded locally in a controlled fashion without weakening the connecting webs in the chamber not folded.

Preferably the intermediate wall is situated in a region of closest proximity of the connecting webs and in particular in the geometric center between the two wall elements.

The profile may be formed substantially symmetrically with respect to the center plane of the intermediate wall, but this is not necessary. It may turn out to be advantageous to depart from this symmetry in view of the fact that in case of an impact, the outer wall element is substantially subjected to pressure, while the profile region adjacent to the other wall element facing the interior space is substantially subjected to tension load, so that for optimization it might be advantageous to depart from this symmetry.

According to a preferred embodiment the connecting webs run substantially linear and diverging from the intermediate wall towards at least one wall element. Here, according to a first embodiment it is conceivable for the connecting webs to run substantially linear and diverging from the intermediate wall to both wall elements, optionally at different divergence angles.

But it is also conceivable for the connecting webs to run substantially linear and diverging towards one of the wall elements only, while, on the other hand, the connecting webs run substantially linear and at constant distance or smaller divergence from the intermediate wall to the other wall element.

Furthermore, it has turned out that optimization of the bending and energy absorption behaviour at impact load, providing for as little weight per unit length of the impact beam as possible, is achieved if the mutual distance between the connecting webs is at least 40%, preferably at least 50%, most preferably at least 60% and preferably less than 100% of the distance between the wall elements, the distances each time being measured between the center planes of the connecting webs and the center planes of the wall elements and the transition curvatures not being taken into account in these measures; in case of inclinating or curved connecting webs their distance is to be measured in the region of closest proximity.

It is conceivable that at least one of the wall elements protrudes beyond at least one of the connecting web faces facing away from each other.

In case of a profile shape wherein the connecting webs, departing from the intermediate wall, converge more strongly to a first wall element than to a second wall element, it may be sufficient if only this second wall element protrudes beyond the faces of both connecting webs facing away from each other.

In principle it is also possible for both wall elements to protrude beyond those faces of both connecting webs facing away from each other.

It is also conceivable that the wall thickness of the connecting webs from the intermediate wall to a first wall element is greater than the wall thickness of the connecting webs from the intermediate wall towards a second wall element, in particular if the first wall element preferably is the inner wall element, as seen from the interior of the vehicle. This configuration again takes into account the different load and deformation behaviour in the profile region near the interior space and that remote from the interior space.

It is also conceivable to provide several, preferably at least two pairs of connecting webs inclinating or curved towards each other, with one intermediate wall each, between the wall elements. In this case, the protrusion of the wall portions is automatically formed between the pairs of the connecting webs. Moreover, it is also possible for the wall elements to protrude beyond the webs at the ends as well, so that the deformation of the wall elements along their total height may be kept under control to as far an extent as possible.

With an embodiment where several pairs of connecting webs are provided it has turned out to be favourable in view of the above requirements that the distance between the adjacent connecting webs of adjacent pairs of connecting webs is greater than the distance between the respective connecting webs constituting one pair.

The profile may be produced by metal extrusion, preferably from aluminum or aluminum alloy.

The wall portion having an impact beam of the above configuration is also a subject matter according to the present invention.

The accompanying drawings, Figs. 1-9, illustrate the invention by way of exemplary embodiments, where
- Fig. 1: shows in a schematic inside view a motor vehicle door provided with an impact beam according to the invention;
- Fig. 2: is a schematic section of the door taken along line II-II of Fig. 1, and
- Figs. 3-9: illustrate various embodiments of impact beams according to the invention.

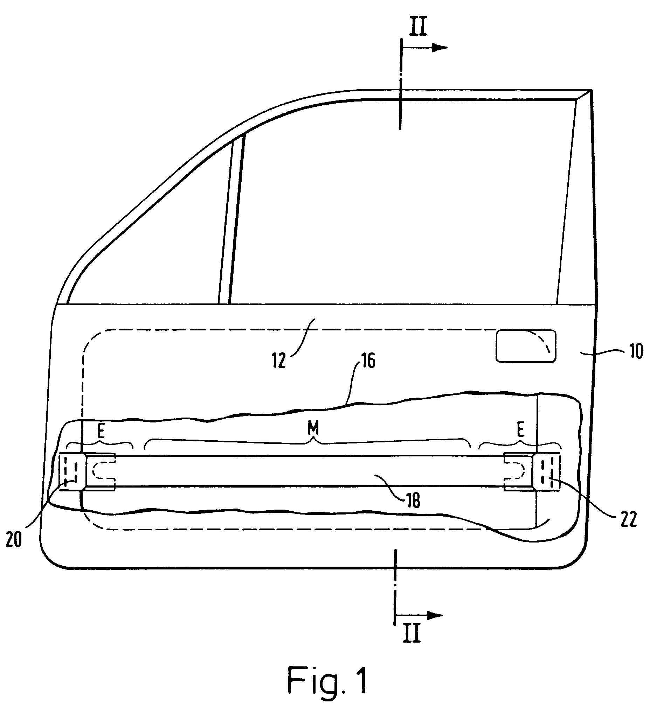

In Fig. 1 a motor vehicle door is generally depicted as 10 displaying the frame 12 of the door. In the region of a cut-away portion 16 of the inner wall of the door or cover panel, an impact beam 18 according to the invention which is attached to the frame 12 at 20 and 22 with possibility to reduce the width of the impact beam 18 in the end regions E as viewed orthogonally to the door plane, so that the door thickness as measured orthogonally to the plane of projection may be kept small in spite of attachment to the door frame 12 in these end regions as well. This configuration does not substantially impair the deformation behaviour of the impact beam, as it is the central longitudinal region M which is substantially responsible for the deformation behaviour.

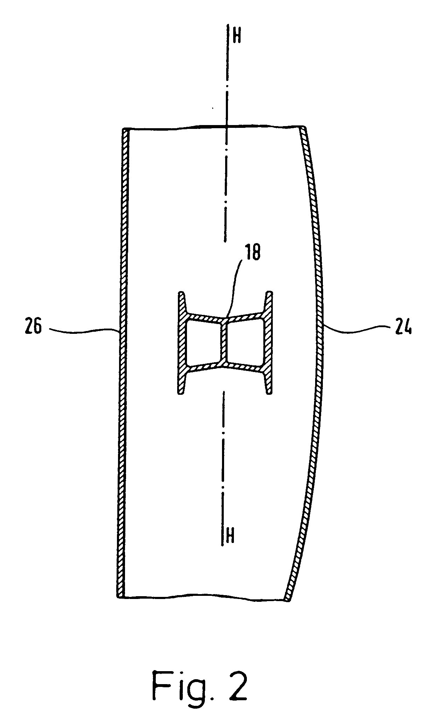

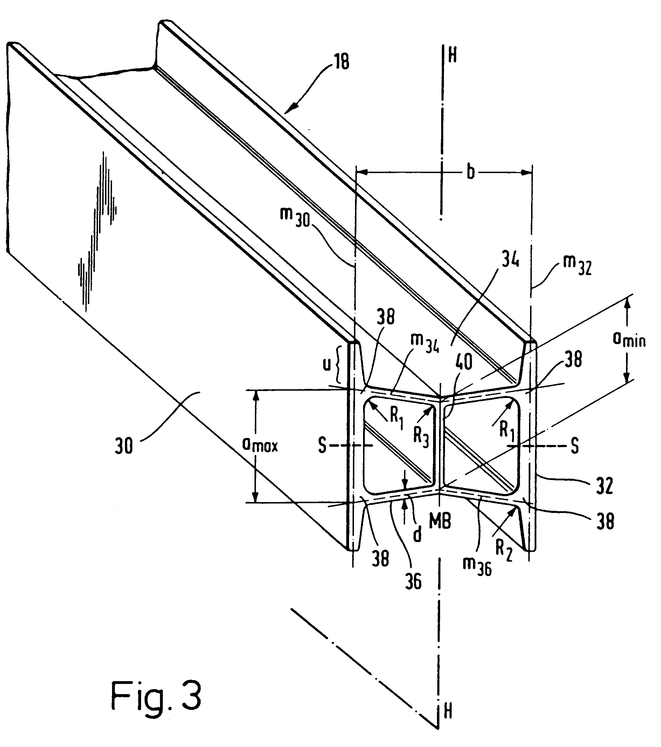

Fig. 2 shows the orientation of the profile of the impact beam 18 between the outer wall 24 of the door and an interior cover panel 26. The principal plane of the door is depicted as H-H. This principal plane is drawn in each of the following Figs. 3-9 so as to always be aware of the orientation of the impact beam with respect to the principal plane H.

In Fig. 3 the impact beam 18 consists of a wall element 30 and a wall element 32. The two wall elements 30 and 32 are interconnected to each other by means of a connecting web 34 and a connecting web 36.

The connecting webs 34 and 36 are inclinated towards each other, so that they have a minimum distance aₘᵢₙ in a central region MB and a distance aₘₐₓ at the junctions 38 with the wall elements 30 and 32. In the central region the two connecting webs 34 and 36 are linked to each other by an intermediate wall 40. The distance b between the wall elements 30 and 32 is measured between center planes m₃₀ and m₃₂, while the distances aₘₐₓ and aₘᵢₙ of the connecting webs are measured between the center planes m₃₄ and m₃₆. The wall elements 30,32 extend beyond the connecting webs 34 and 36 forming projections designated by u. The impact beam is formed symmetrically with respect to a plane of symmetry S-S. The wall thickness of the connecting webs is designated by d.

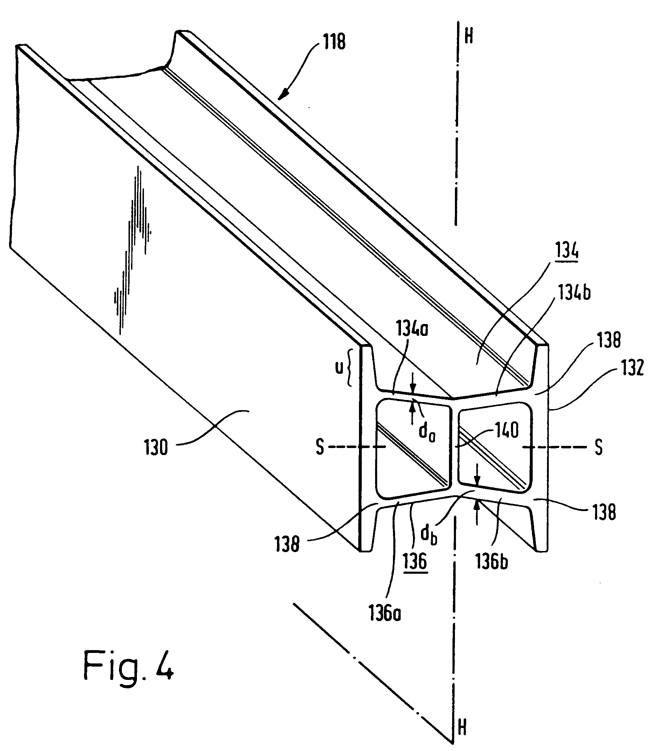

In the embodiment of Fig. 4, similar parts are depicted by the same reference numerals as in Fig. 3, always augmented by the number 100.

The substantial difference between the embodiment of Figs. 4 and 3 resides in the fact that web portions 134ₐ and 136ₐ adjacent to the wall element 130, which is the outer one with respect to the interior of the vehicle, have a small thickness dₐ than the sections 134_{b} and 136_{b} adjacent to the in this case interior wall element 132, the thickness of which is depicted by d_{b}.

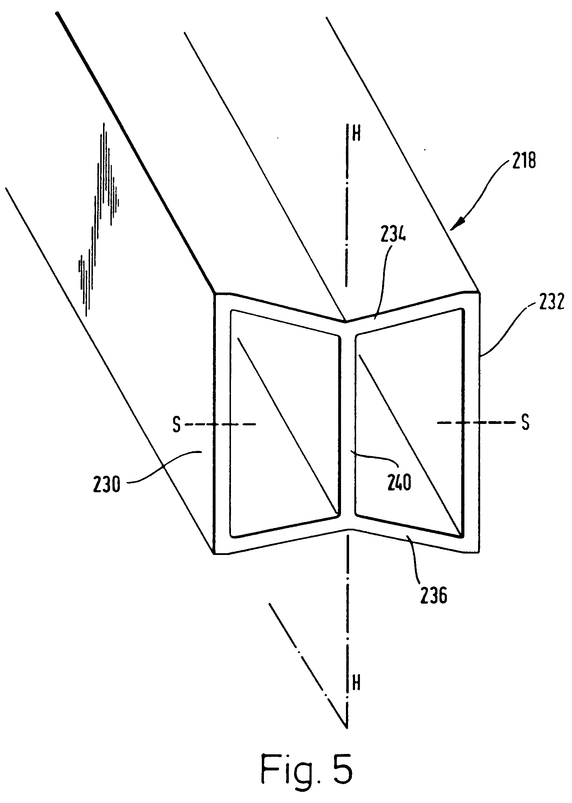

In the embodiment of Fig. 5, similar parts are again designated by the same reference numerals as in Fig. 3, always augmented by the number 200.

This embodiment is different from those of Figs. 3 and 4 in that the projections u are not incorporated.

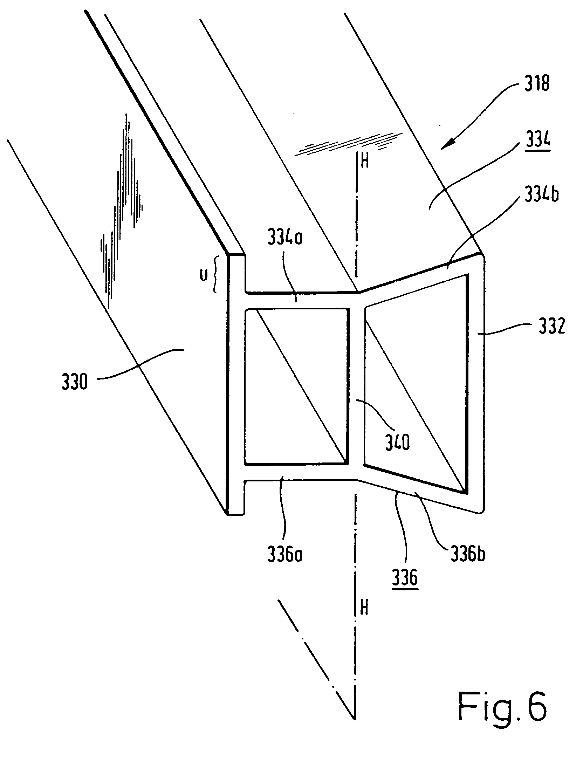

In the embodiment of Fig. 6 similar parts are designated by the same reference numerals as in Fig. 3, always augmented by the number 300.

Fig. 6 is different from the embodiment of Fig. 3 in that, departing from the intermediate wall 340, only the web portions 334_{b} and 336_{b} diverge towards the wall element 332 being the inner one with respect to the interior of the vehicle, while the web portions 334ₐ and 336ₐ run substantially parallel to each other or diverge to a lesser extent than the web portions 334_{b}, 336_{b}. With this embodiment the projections u are only provided at wall element 330, preferably being installed as the outer wall element, i.e. that facing away from the interior of the car.

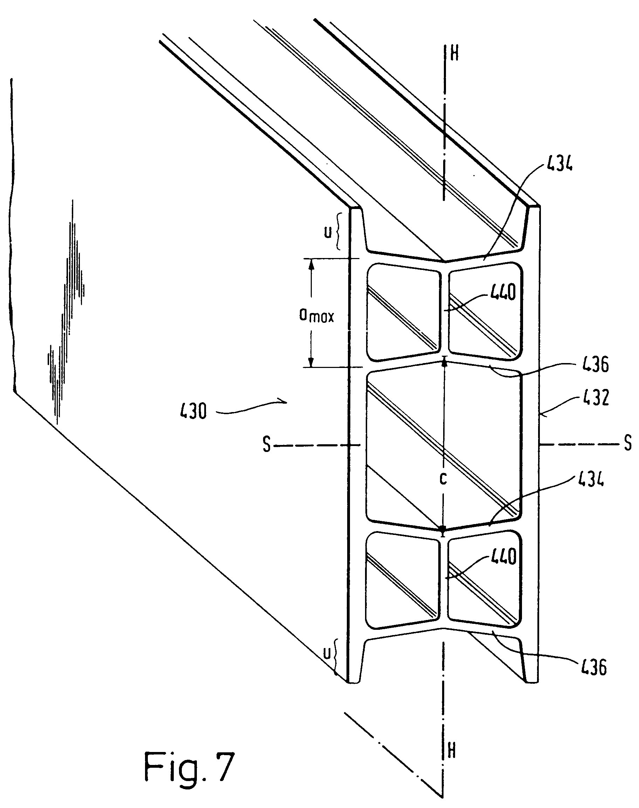

In the embodiment of Fig. 7, two pairs of connecting webs 434 and 436 are provided between the two wall elements 430 and 432, having one intermediate wall 440 each. The distance c between the adjacent connecting webs 434 and 436 of both pairs is greater than the distance aₘₐₓ between two connecting webs 434 and 436 belonging to a common pair. Here the projections u are provided on both wall elements 430 and 432.

Returning to Fig. 3, it has to be said that the difference aₘₐₓ -aₘᵢₙ is somewhat smaller than width b and amounts to about 60% of the width b.

Fig. 3 shows transition curvatures R₁,R₂,R₃. These transition curvatures are of importance; their radius of curvature is determined by calculation or simple pretests.

It is to be noted that the connecting webs of Fig. 7 may have the same configuration as shown in Fig. 4. Furthermore, it is to be noted that the projections u of Fig. 7 may be omitted on at least one of the wall elements, as shown in Figs. 5 and 6.

A particular advantage of the solution according to the present invention in terms of reducing the weight while maintaining the impact characteristics resides in the fact that, due to the intermediate wall 40 between the connecting webs 34,36, the wall thickness of these connecting webs may be kept relatively small without losing the spacing function of these connecting webs. This can be seen in Fig. 3, where the wall thickness of the connecting webs is chosen to be considerably smaller than the wall thickness of wall elements 30,32 contrary to the prior art solutions where the wall thickness of connecting webs and wall elements are substantially the same. Here the wall thickness of intermediate wall 40 may be relatively small; it may be approximately equal to the wall thickness of the connecting webs 34,36. Thus, in spite of the shape of the connecting webs, which appears to be unfavourable at first sight because of the inclination and as such might jeopardize the spacing function of the connecting webs, an altogether positive result may be obtained by the simultaneous application of the intermediate wall, which is surprising.

The combination of connecting webs brought closer to each other and the intermediate wall ensures not only reinforcing, but also controlled deformation of the impact beam in case of a crash.

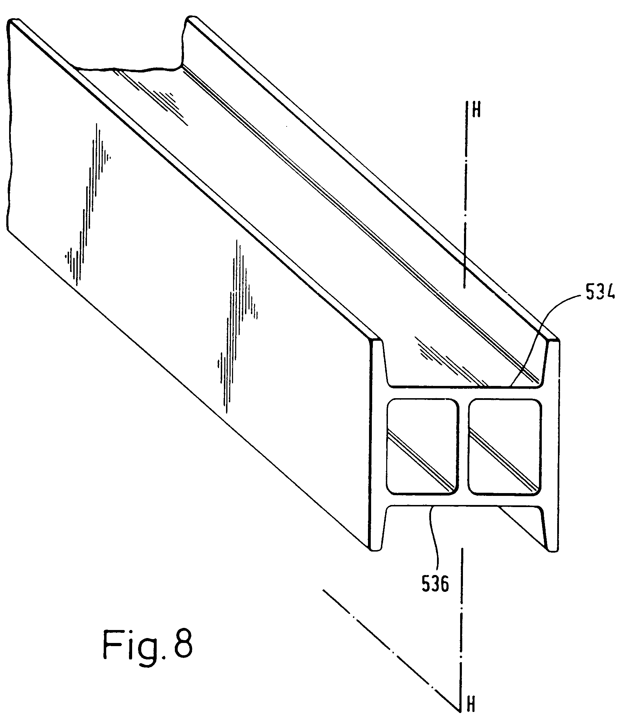

Fig. 8 shows an embodiment which differs from that of Fig. 3 only in that the webs 534 and 536 are not inclinating towards each other but extend substantially linear.

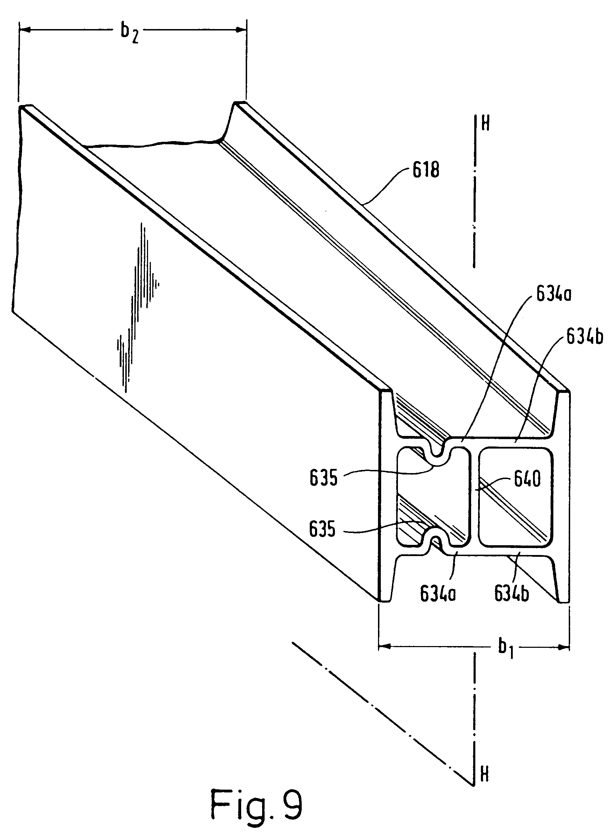

The embodiment of Fig. 9 differs from that of Fig. 8 in that folds 635 are introduced into the web portions 634a by controlled deformation (prefolding). These folds are preferably introduced by controlled deformation prior to installation into the door or the wall portion. These folds 635 may, but need not, extend throughout the total length of the impact beam 618. It is conceivable to provide these folds 635 only over a part of the length of the impact beam 618, e.g. at the beam ends, and let them continuously level out until they disappear. In this way an impact beam is obtained whose width b₁ in a region of longitudinal extension is smaller than width b₂ in a different region of longitudinal extension. Here it is also conceivable for the impact beam 618 to have the full width b₂ over a part of its length and to have the reduced width b₁ over a smaller or larger remaining part of its length by the simple fact that the folds 635 extend only over this remaining part of the length.

In this way it is possible to obtain an impact beam that may be used if there is room for the full width b₂ only over a certain region inside the door or a wall portion. Here these two web portions 634b remain non-deformed and are still fully available to provide sufficient deformation strength, their support being provided for by intermediate wall 640.

## Claims

1. An impact beam (18) for reinforcing of a wall portion (10) of a motor vehicle, in particular a side wall portion or a door (10) of a passenger car, the impact beam (18) being a profile made of light metal or light metal alloy comprising two wall elements (30,32) extending substantially parallel to a principal plane (H-H) of the wall portion and spaced from each other orthogonally to the principal plane (H-H), as well as at least two connecting webs (34,36) interconnecting these wall elements (30,32), spaced from each other in a direction parallel to the principal plane (H-H),
**characterized in** that
the connecting webs (34,36) are interconnected to each other in a central region (MB) between the two wall elements (30,32) by at least and preferably one intermediate wall (40) extending substantially parallel to the wall elements (30,32).

2. The impact beam according to claim 1,
**characterized in** that
the connecting webs (34,36) are inclinated or curved towards each other.

3. The impact beam according to claim 2,
**characterized in** that
the intermediate wall (40) is situated in a region (MB) of closest proximity of the connecting webs (34,36).

4. The impact beam according to any of claims 2 or 3,
**characterized in** that
the proximity (aₘₐₓ - aₘᵢₙ) of the connecting webs (34,36) caused by inclination or curving amounts to from about 1.0 times to about 6.0 times the wall thickness (d) of the connecting webs (34,36).

5. The impact beam according to any of claims 1 to 4,
**characterized in** that
the profile is formed substantially symmetrically with respect to a center plane of the intermediate wall (40).

6. The impact beam according to any of claims 1 to 4,
**characterized in** that
the profile is formed asymmetrically with respect to a center plane of the intermediate wall (40).

7. The impact beam according to any of claims 1 to 6,
**characterized in** that
the connecting webs (34,36) run substantially linear and diverging from the intermediate wall (40) towards at least one wall element (30,32).

8. The impact beam according to claim 7,
**characterized in** that
the connecting webs (34,36) run substantially linear and diverging from the intermediate wall (40) to both wall elements (30,32).

9. The impact beam according to claim 7,
**characterized in** that
the connecting webs (334ₐ,336ₐ) run substantially linear and at constant distance or smaller divergence from the intermediate wall (340) to the other wall element (330).

10. The impact beam according to any of claims 1 to 9,
**characterized in** that
the mutual distance between the connecting webs (34,36) is at least 40%, preferably at least 50%, most preferably at least 60% and preferably less than 100% of the distance (b) between the wall elements (30,32), the distances (a,b) each time being measured between the center planes (m₃₄,m₃₆) of the connecting webs (34,36) and the center planes (m₃₀,m₃₂) of the wall elements (30,32) and the transition curvatures (R₁,R₂,R₃) not being taken into account in these measures, and the distance (a) being measured in the region of closest proximity of the connecting webs (34,36) in case the connecting (34,36) are inclinating or curved.

11. The impact beam according to claim 10,
**characterized in** that
where the connecting webs (334_{b},336_{b}), departing from the intermediate wall (340), diverge more strongly towards a first wall element (332) than towards a second wall element (330), the second wall element (330) extends beyond the connecting webs (334ₐ,336ₐ) facing away from each other.

12. The impact beam according to any of claims 1-11,
**characterized in** that
the wall thickness (d_{b}) of the connecting webs (134_{b},136_{b}) from the intermediate wall (140) to a first wall element (132) is greater than the wall thickness (dₐ) of the connecting webs (134ₐ,136ₐ) from the intermediate wall (140) to the second wall element (130).

13. The impact beam according to claims 1 to 10,
**characterized in** that
several, preferably at least two pairs (434,436) of connecting webs (434,436) optionally inclinating or curved towards each other are provided between the wall elements (430,432) with one intermediate wall (440) each.

14. The impact beam according to claim 12,
**characterized in** that
the distance (c) between the adjacent connecting webs (434,436) of adjacent pairs of connecting webs (434,436) is greater than the distance (a) between the respective intermediate webs (434,436) constituting one pair.

15. The impact beam according to any of claims 1 to 14,
**characterized in** that
two webs (634a) opposing each other are prefolded by controlled deformation at least over a part of the longitudinal extension of the impact beam (618).

16. A wall portion of a motor vehicle, in particular a side wall portion or door of a passenger car, having at least one impact beam according to any of claims 1 to 15.

## Patentansprüche

1. Aufprallträger (18) zur Versteifung eines Kraftfahrzeugwandteils (10), insbesondere eines Seitenwandteils oder einer Tür (10) eines Personenkraftwagens, wobei dieser Aufprallträger (18) mit einem Profil aus Leichtmetall oder Leichtmetall-Legierung ausgeführt ist und dieses Profil zwei zu einer Hauptebene (H-H) des Wandteils im wesentlichen parallel verlaufende und orthogonal zur Hauptebene (H-H) voneinander beabstandete Wandelemente (30, 32) sowie mindestens zwei diese Wandelemente (30, 32) verbindende, in einer zur Hauptebene (H-H) parallelen Richtung voneinander beabstandete Verbindungsstege (34, 36) aufweist,
dadurch gekennzeichnet, daß die Verbindungsstege (34, 36) in einem mittleren Bereich (MB) zwischen den beiden Wandelementen (30, 32) durch mindestens und vorzugsweise eine zu den Wandelementen (30, 32) im wesentlichen parallel verlaufende Zwischenwand (40) miteinander verbunden sind.

2. Aufprallträger nach Anspruch 1, dadurch gekennzeichnet, daß die Verbindungsstege (34, 36) aufeinander zu geneigt oder gekrümmt sind.

3. Aufprallträger nach Anspruch 2, dadurch gekennzeichnet, daß die Zwischenwand (40) in einem Bereich (MB) größter Annäherung der Verbindungsstege (34, 36) angeordnet ist.

4. Aufprallträger nach einem der Ansprüche 2 oder 3, dadurch gekennzeichnet, daß die durch Neigung oder Krümmung bewirkte Annäherung (aₘₐₓ - aₘᵢₙ) der Verbindungsstege (34, 36) etwa das 1,0-fache bis etwa das 6,0-fache der Wanddicke (d) der Verbindungsstege (34, 36) beträgt.

5. Aufprallträger nach einem der Ansprüche 1 bis 4, dadurch gekennzeichnet, daß das Profil in bezug auf eine Mittelebene der Zwischenwand (40) im wesentlichen symmetrisch ausgebildet ist.

6. Aufprallträger nach einem der Ansprüche 1 bis 4, dadurch gekennzeichnet, daß das Profil in bezug auf eine Mittelebene der Zwischenwand (40) asymmetrisch ausgebildet ist.

7. Aufprallträger nach einem der Ansprüche 1 bis 6, dadurch gekennzeichnet, daß die Verbindungsstege (34, 36) von der Zwischenwand (40) zu mindestens einem Wandelement (30, 32) hin im wesentlichen geradlinig und divergierend verlaufen.

8. Aufprallträger nach Anspruch 7, dadurch gekennzeichnet, daß die Verbindungsstege (34, 36) von der Zwischenwand (40) zu beiden Wandelementen (30, 32) hin im wesentlichen geradlinig und divergierend verlaufen.

9. Aufprallträger nach Anspruch 7, dadurch gekennzeichnet, daß die Verbindungsstege (334ₐ, 336ₐ) von der Zwischenwand (340) zum anderen Wandelement (330) hin im wesentlichen geradlinig und mit konstantem Abstand oder geringerer Divergenz verlaufen.

10. Aufprallträger nach einem der Ansprüche 1 bis 9, dadurch gekennzeichnet, daß der gegenseitige Abstand zwischen den Verbindungsstegen (34, 36) mindestens 40 %, vorzugsweise mindestens 50 %, höchstvorzugsweise mindestens 60 % und vorzugsweise weniger als 100 % des Abstands (b) zwischen den Wandelementen (30, 32) beträgt, wobei die Abstände (a, b) jeweils zwischen den Mittelebenen (m₃₄, m₃₆) der Verbindungsstege (34, 36) und den Mittelebenen (m₃₀, m₃₂) der Wandelemente (30, 32) gemessen sind und Übergangsrundungen (R₁, R₂, R₃) bei diesen Maßen außer Betracht bleiben und wobei der Abstand (a) im Falle der Neigung oder Krümmung der Verbindungsstege (34, 36) im Bereich größter Annäherung der Verbindungsstege (34, 36) gemessen ist.

11. Aufprallträger nach Anspruch 10, dadurch gekennzeichnet, daß dann, wenn die Verbindungsstege (334_{b}, 336_{b}) von der Zwischenwand (340) ausgehend zu einem ersten Wandelement (332) hin stärker divergieren als zu einem zweiten Wandelement (330) hin, das zweite Wandelement (330) über die voneinander abgewandten Verbindungsstege (334ₐ, 336ₐ) hinausragt.

12. Aufprallträger nach einem der Ansprüche 1 bis 11, dadurch gekennzeichnet, daß die Wanddicke (d_{b}) der Verbindungsstege (134_{b}, 136_{b}) von der Zwischenwand (140) zu einem ersten Wandelement (132) größer als die Wanddicke (dₐ) der Verbindungsstege (134ₐ, 136ₐ) von der Zwischenwand (140) zu dem zweiten Wandelement (130) ist.

13. Aufprallträger nach einem der Ansprüche 1 bis 10, dadurch gekennzeichnet, daß zwischen den Wandelementen (430, 432) mehrere, vorzugsweise mindestens zwei Paare (434, 436) von gegebenenfalls aufeinander zu geneigten oder gekrümmten Verbindungsstegen (434, 436) mit jeweils einer Zwischenwand (440) vorgesehen sind.

14. Aufprallträger nach Anspruch 12, dadurch gekennzeichnet, daß der Abstand (c) zwischen den benachbarten Verbindungsstegen (434, 436) benachbarter Paare von Verbindungsstegen (434, 436) größer als der Abstand (a) zwischen den jeweils ein Paar bildenden Zwischenstegen (434, 436) ist.

15. Aufprallträger nach einem der Ansprüche 1 bis 14, dadurch gekennzeichnet, daß zwei einander gegenüberliegende Stege (634a) durch kontrollierte Verformung zumindest auf einem Teil der Längserstreckung des Aufprallträgers (618) vorgefaltet sind.

16. Wandteil eines Kraftfahrzeugs, insbesondere Seitenwandteil oder Tür eines Personenkraftwagens, mit mindestens einem Aufprallträger nach einem der Ansprüche 1 bis 15.

## Revendications

1. Poutrelle (18) résistant aux chocs destinée à renforcer une partie (10) de paroi d'un véhicule à moteur, en particulier une partie de paroi latérale ou une porte (10) de voiture automobile, la poutrelle (18) résistant aux chocs étant un profilé formé d'un métal léger ou d'un alliage métallique léger comprenant deux éléments de paroi (30, 32) qui sont pratiquement parallèles à un plan principal (H-H) de la partie de paroi et séparés l'un de l'autre en direction perpendiculaire au plan principal (H-H), ainsi qu'au moins deux joues (34, 36) de raccordement de ces éléments de paroi (30, 32), distantes l'une de l'autre en direction parallèle au plan principal (H-H),
caractérisée en ce que
les joues (34, 36) de raccordement sont interconnectées l'une à l'autre, dans une région centrale (MB) entre les deux éléments de paroi (30, 32), par au moins une paroi intermédiaire (40), et de préférence une seule paroi, qui est pratiquement parallèle aux éléments de paroi (30, 32).

2. Poutrelle résistant aux chocs selon la revendication 1, caractérisée en ce que les joues (34, 36) de raccordement sont inclinées ou recourbées l'une vers l'autre.

3. Poutrelle résistant aux chocs selon la revendication 2, caractérisée en ce que la paroi intermédiaire (40) est placée dans la région (MB) de plus grande proximité des joues de raccordement (34, 36).

4. Poutrelle résistant aux chocs selon l'une des revendications 2 et 3, caractérisée en ce que le rapprochement (aₘₐₓ - aₘᵢₙ) des joues de raccordement (34, 36) dû à l'inclinaison ou à la courbure est compris entre 1,0 et 6,0 fois environ l'épaisseur de paroi (d) des joues de raccordement (34, 36).

5. Poutrelle résistant aux chocs selon l'une des revendications 1 à 4, caractérisée en ce que le profilé est formé de manière pratiquement symétrique par rapport à un plan central de la paroi intermédiaire (40).

6. Poutrelle résistant aux chocs selon l'une des revendications 1 à 4, caractérisée en ce que le profilé est réalisé asymétriquement par rapport à un plan central de la paroi intermédiaire (40).

7. Poutrelle résistant aux chocs selon l'une quelconque des revendications 1 à 6, caractérisée en ce que les joues de raccordement (34, 36) sont pratiquement rectilignes et divergent de la paroi intermédiaire (40) vers au moins un élément de paroi (30, 32).

8. Poutrelle résistant aux chocs selon la revendication 7, caractérisée en ce que les joues de raccordement (34, 36) sont pratiquement rectilignes et divergent depuis la paroi intermédiaire (40) vers les deux éléments de paroi (30, 32).

9. Poutrelle résistant aux chocs selon la revendication 7, caractérisée en ce que les joues de raccordement (334ₐ, 336ₐ) sont pratiquement rectilignes et à distance constante ou divergent légèrement de la paroi intermédiaire (340) vers l'autre élément de paroi (330).

10. Poutrelle résistant aux chocs selon l'une des revendications 1 à 9, caractérisée en ce que la distance mutuelle des joues de raccordement (34, 36) est d'au moins 40 % et de préférence d'au moins 50 %, très avantageusement d'au moins 60 % et de préférence de moins de 100 % de la distance (b) comprise entre les éléments de paroi (30, 32), les distances (a, b) étant mesurées chaque fois entre les plans centraux (m₃₄, m₃₆) des joues de raccordement (34, 36) et les plans centraux (m₃₀, m₃₂) des éléments de paroi (30, 32), les courbures de transition (R₁, R₂, R₃) n'étant pas prises en compte dans ces mesures, la distance (a) étant mesurée dans la région de plus grande proximité des joues de raccordement (34, 36) dans le cas où le raccordement (34, 36) est incliné ou courbe.

11. Poutrelle résistant aux chocs selon la revendication 10, caractérisée en ce que, à l'endroit où les joues de raccordement (334_{b}, 336_{b}), en s'écartant de la paroi intermédiaire (340), divergent plus fortement vers le premier élément de paroi (332) que vers un second élément de paroi (330), le second élément de paroi (330) dépasse au-delà des joues de raccordement (334ₐ, 336ₐ) tournées en sens opposés.

12. Poutrelle résistant aux chocs selon l'une quelconque des revendications 1 à 11, caractérisée en ce que l'épaisseur de paroi (d_{b}) des joues de raccordement (134_{b}, 136_{b}) depuis la paroi intermédiaire (140) vers un premier élément de paroi (132) est plus grande que l'épaisseur de paroi (dₐ) des joues de raccordement (134ₐ, 136ₐ) de la paroi intermédiaire (140) vers le second élément de paroi (130).

13. Poutrelle résistant aux chocs selon les revendications 1 à 10, caractérisée en ce que plusieurs paires, de préférence au moins deux paires (434, 436), de joues de raccordement (434, 436), éventuellement inclinées ou recourbées l'une vers l'autre, sont placées entre les éléments de paroi (430, 432) avec une paroi intermédiaire (440) chacune.

14. Poutrelle résistant aux chocs selon la revendication 12, caractérisée en ce que la distance (c) entre les joues adjacentes de raccordement (434, 436) des paires adjacentes de joues de raccordement (434, 436) est supérieure à la distance (a) comprise entre les joues intermédiaires respectives (434, 436) constituant une première paire.

15. Poutrelle résistant aux chocs selon l'une quelconque des revendications 1 à 14, caractérisée en ce que deux joues (634a) qui sont opposées sont préalablement pliées par déformation contrôlée sur une partie au moins suivant la dimension longitudinale de la poutrelle résistant aux chocs (618).

16. Partie de paroi de véhicule moteur, en particulier partie de paroi latérale ou de porte de voiture automobile, ayant au moins une poutrelle résistant aux chocs selon l'une quelconque des revendications 1 à 15.
